# FASCICULE DE BREVET EUROPEEN

(11) **EP 1 167 159 B1**
(45) Date de publication et mention de la délivrance du brevet: **06.10.2004**
(21) Numéro de dépôt: 01420121.4
(22) Date de dépôt: 21.05.2001
(51) Int. Cl.: B62D 5/083

(54) **Valve d'assistance pour direction assistée hydraulique de véhicule automobile**
Servoventil für eine hydraulische Kraftfahrzeugservolenkung
Servo valve for hydraulic power steering of a motor vehicle

(30) Priorité: 28.06.2000 FR 0008336
(43) Date de publication de la demande: 02.01.2002
(73) Titulaire: Société de Mécanique d'Irigny, 69540 Irigny (FR)
(72) Inventeur: Simon, Patrick, 69510 Yzeron (FR)
(74) Mandataire: Bratel, Gérard

(56) Documents cités:
- FR-A- 2 752 809

## Description

La présente invention concerne les systèmes de direction assistée hydraulique, pour véhicules automobiles. Plus particulièrement, cette invention a pour objet un perfectionnement apporté aux valves d'assistance, habituellement incorporées dans ce type de directions assistées.

Une valve de direction assistée hydraulique de véhicule automobile comprend, de façon généralement connue, un rotor lié par l'intermédiaire d'une barre de torsion à un pignon, venant lui-même en prise avec la crémaillère de la direction, le rotor de forme générale tubulaire étant monté autour de la barre de torsion, et étant entouré par une chemise rotative, liée en rotation avec le pignon, le rotor et le pignon étant montés rotatifs suivant un même axe dans un carter par l'intermédiaire de paliers. La valve d'assistance comporte encore des canaux et chambres remplis d'huile, qui lui permettent de se comporter comme un distributeur hydraulique fournissant une pression d'huile qui est une fonction croissante du couple appliqué sur cette valve et déformant sa barre de torsion.

A titre d'exemple d'une telle valve d'assistance, il peut être fait référence à la demande de brevet français FR 2 752 809 au nom du demandeur, ou à la demande de brevet européen correspondante EPO 827 892, montrant les caractéristiques définies dans le préambule de la revendication 1.

De par sa conception, une valve de direction assistée hydraulique, telle que rappelée ci-dessus, contient des « volumes morts » remplis d'huile, volumes dans lesquels les ondes hydrauliques peuvent soit s'amortir, soit au contraire entrer en résonance, ceci en fonction de nombreux paramètres qui font que l'onde génératrice s'accorde ou non.

Le fait que l'onde hydraulique entre en résonance peut gérer des bruits et/ou des vibrations, et ces bruits et vibrations d'origine interne à la valve d'assistance peuvent se propager par exemple au travers de la colonne de direction, jusqu'à l'habitacle du véhicule, et occasionner alors une gêne pour le conducteur de ce véhicule.

La présente invention vise à perfectionner une valve d'assistance du genre ici considéré, de manière à supprimer les bruits et vibrations en question, d'origine hydraulique, et la gêne qui en résulte, par une solution technique simple et efficace.

A cet effet, l'invention a essentiellement pour objet une valve d'assistance pour direction assistée hydraulique de véhicule automobile, du genre ici concerné, qui est pourvue de moyens de réglage des volumes morts d'huile contenus dans cette valve d'assistance, de manière à amortir les ondes hydrauliques perturbatrices.

Ainsi, la mise en résonance des ondes dépendant des caractéristiques des volumes morts d'huile inclus dans la valve, l'idée à la base de la présente invention consiste à rendre réglable le volume mort d'huile notamment à la fabrication, afin d'obtenir l'amortissement des ondes hydrauliques perturbatrices. Cette solution permet de régler le volume mort d'huile en fonction des spécificités de l'onde génératrice et de chaque véhicule, afin de l'amortir de façon adaptée et certaine, donc d'empêcher la mise en résonance et de supprimer ainsi la cause même des phénomènes de bruit et de vibration à éviter.

Dans une forme de réalisation particulière de l'invention, les moyens de réglage des volumes morts d'huile sont constitués par une vis de réglage, montée dans un trou taraudé qui est ménagé dans le carter, entre un volume mort et l'extérieur. Ainsi, le volume mort est modifié en vissant plus ou moins profondément la vis de réglage dans le trou taraudé correspondant, cette vis étant manoeuvrable depuis l'extérieur de la valve.

Selon une caractéristique additionnelle avantageuse de l'invention, les moyens de réglage des volumes morts d'huile sont complétés par au moins un élément amortisseur, tel que ressort et/ou bloc amortisseur et/ou volume d'air emprisonné et/ou élément permettant un passage d'huile par un orifice de restriction, afin d'avoir plus de latitude pour amortir les ondes perturbatrices. Cette caractéristique additionnelle peut être combinée avec la forme de réalisation précédemment indiquée, l'élément amortisseur tel que ressort, associé à un petit piston, étant placé dans le trou de montage de la vis de réglage, sous cette vis, le piston coopérant avec une portion lisse dudit trou.

De toute façon, l'invention sera mieux comprise à l'aide de la description qui suit, en référence au dessin schématique annexé représentant, à titre d'exemples, deux formes d'exécution de cette valve d'assistance pour direction assistée hydraulique de véhicule automobile :
Figure 1 est une vue en coupe longitudinale d'une valve d'assistance conforme à la présente invention, dans une première forme de réalisation ;
Figure 2 est une vue similaire à figure 1, illustrant une variante de cette valve d'assistance.

La valve d'assistance représentée au dessin comprend, disposés suivant son axe longitudinal 1 à l'intérieur du carter de direction 2, un pignon 3 et un rotor 4, ce dernier étant entouré partiellement par une chemise 5. Le pignon 3, venant en prise avec la crémaillère (non représentée), est guidé en rotation dans le carter 2 par un palier 6, auquel est associé un joint annulaire d'étanchéité 7. Le rotor 4 est guidé en rotation dans le carter 2 par un autre palier 8, auquel est aussi associé un joint annulaire d'étanchéité 9.

L'extrémité intérieure du pignon 3 est liée en rotation, par un pion d'entraînement (non représenté), à la chemise 5.

Le rotor 4, de conformation tubulaire, est lié en rotation par sa partie extérieure avec la colonne de direction du véhicule concerné. A l'intérieur du rotor 4, suivant l'axe 1, est disposée une barre de torsion 10, dont une extrémité est encastrée dans le pignon 3, et dont l'autre extrémité est liée en rotation, par une goupille 11, avec l'extrémité extérieure du rotor 4.

En conséquence de cette structure, l'ensemble pignon 3-chemise 5 peut décrire une rotation relative d'amplitude limitée, par rapport au rotor 4.

La valve d'assistance comporte encore des chambres et canaux hydrauliques, lui permettant de fonctionner comme un distributeur hydraulique proportionnel au couple. Sur cette valve s'exercent, d'une part, un couple résistant sur le pignon 3, provenant de l'adhérence des roues directrices du véhicule et transmis par la crémaillère, et d'autre part, un couple d'entrée sur le rotor 4 provenant du volant ; ces deux couples sont de sens contraires.

Ainsi, les deux couples entraînent une torsion de la barre de torsion 10, donc un décalage angulaire entre le rotor 4 (lié au volant) et la chemise 5 (liée au pignon 3 par l'intermédiaire du pion d'entraînement). Ce décalage angulaire ouvre, proportionnellement au couple, un passage hydraulique vers une chambre de vérin, tandis qu'une chambre opposée est en communication avec le circuit de retour hydraulique. La pression dans la chambre de vérin augmente, au fur et à mesure que le décalage angulaire entre le rotor 4 et la chemise 5 s'accroît. Cette pression engendre sur la chemise 5 un couple moteur, qui est transmis au pignon 3 et qui s'oppose ainsi au couple résistant.

Le circuit hydraulique d'une telle valve d'assistance contient des « volumes morts » remplis d'huile par exemple à basse pression, tels que le volume annulaire indiqué en 12, délimité par le carter 2, le pignon 3, une extrémité de la chemise 5 et le joint annulaire 7. La présente invention vise à perfectionner ce genre de valve, de manière à supprimer les bruits et vibrations d'origine hydraulique, résultant de la mise en résonance d'ondes hydrauliques dans les volumes morts tels que le volume 12.

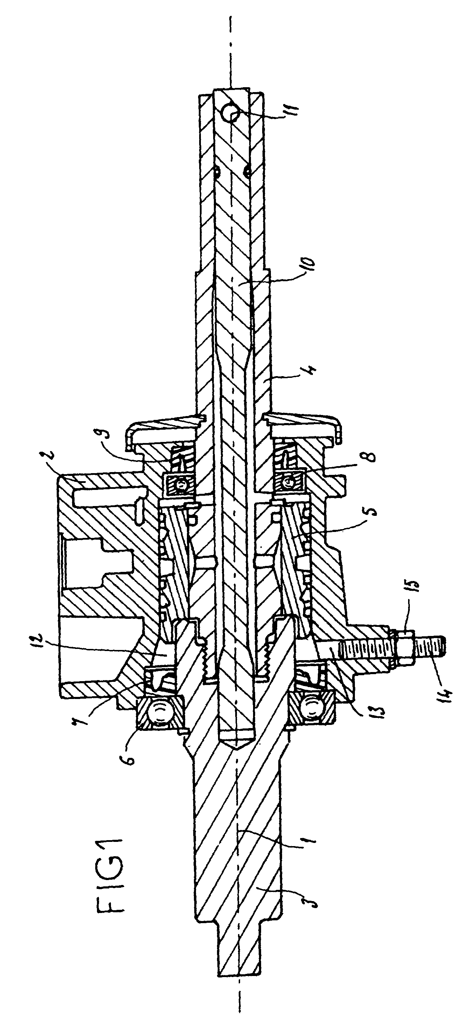

A cet effet, selon la figure 1, un trou 13, taraudé sur au moins une partie de sa longueur, est percé au travers du carter 2, entre un point du volume mort 12 et l'extérieur de la valve d'assistance. Le taraudage du trou 13 reçoit une vis de réglage 14, pouvant être enfoncée plus ou moins profondément par vissage dans ce trou 13, de manière à ajuster le volume mort 12. La vis de réglage 14 reçoit, extérieurement, un écrou de blocage 15 qui est serré contre la paroi extérieure du carter 2, une fois le réglage effectué, de manière à immobiliser la vis de réglage 14 dans la position choisie. Une étanchéité est réalisable entre l'écrou 15 et le carter 2.

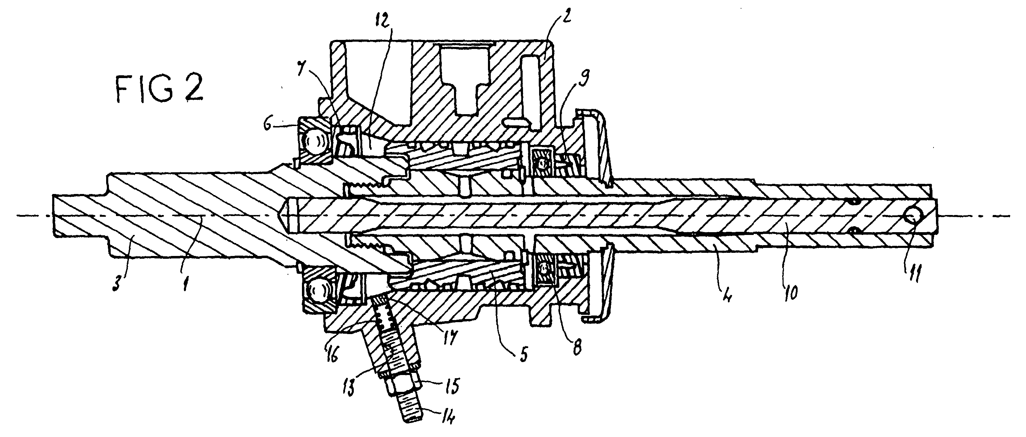

La figure 2 montre une autre forme de réalisation, qui comprend elle aussi une vis de réglage 14, avec écrou de blocage 15, vissée dans un trou taraudé 13 percé entre le volume mort 12 et l'extérieur de la valve d'assistance. Le dispositif est ici complété par un élément amortisseur, constitué par un ressort 16 associé à un petit piston 17, placé dans le trou 13 sous la vis de réglage 14, dans une portion lisse de ce trou 13, le piston 17 formant ainsi une portion de paroi du volume mort 12.

Comme le montre la comparaison des figures 1 et 2, la position et/ou l'inclinaison du trou taraudé 13 recevant la vis de réglage 14 peut varier, l'axe du trou 13 et de la vis 14 pouvant être perpendiculaire ou oblique par rapport à l'axe longitudinal 1 de la valve d'assistance.

L'on ne s'éloignerait pas du cadre de l'invention, telle que définie dans les revendications annexées :
- en remplaçant les vis de réglage par tout organe équivalent, permettant de régler les volumes morts d'huile ;
- en disposant l'organe de réglage en toute position et selon toute orientation appropriée ;
- dans le cas d'une réalisation avec élément amortisseur associé à l'organe de réglage, en donnant à cet élément amortisseur toute forme appropriée, telle que bloc amortisseur en élastomère, ou volume d'air emprisonné, ou encore élément permettant un passage d'huile par un orifice de restriction, etc ...

Enfin, dans le même ordre d'idées, les dispositions conformes à l'invention, telle que définie dans les revendications annexées, restent naturellement applicables à des valves d'assistance dont les détails constructifs, tels que ceux concernant les paliers et les joints, diffèreraient des réalisations illustrées à titre de simples exemples sur le dessin annexé.

## Revendications

1. Valve d'assistance pour direction assistée hydraulique de véhicule automobile, comprenant, à l'intérieur d'un carter (2), un pignon (3) et un rotor tubulaire (4) montés rotatifs suivant un même axe (1) et liés par l'intermédiaire d'une barre de torsion (10) disposée suivant ledit axe (1), ainsi qu'une chemise rotative (5) entourant le rotor (4) et liée en rotation avec le pignon (3), la valve d'assistance comportant encore des canaux et chambres hydrauliques, **caractérisée en ce que**, pour supprimer les bruits et vibrations d'origine hydraulique, la valve d'assistance est pourvue de moyens de réglage (13, 14, 15) des volumes morts d'huile (12) contenus dans cette valve d'assistance, de manière à amortir les ondes hydrauliques perturbatrices.

2. Valve d'assistance selon la revendication 1, **caractérisée en ce que** les moyens de réglage des volumes morts d'huile (12) sont constitués par une vis de réglage (14) montée dans un trou taraudé (13) qui est ménagé dans le carter (2), entre le volume mort (12) et l'extérieur.

3. Valve d'assistance selon la revendication 1 ou 2, **caractérisée en ce que** les moyens de réglage (13, 14, 15) des volumes morts d'huile (12) sont complétés par au moins un élément amortisseur (16, 17), tel que ressort et/ou bloc amortisseur et/ou volume d'air emprisonné et/ou élément permettant un passage d'huile par un orifice de restriction.

4. Valve d'assistance selon l'ensemble des revendications 2 et 3, **caractérisée en ce que** l'élément amortisseur tel que ressort (16), associé à un petit piston (17), est placé dans le trou de montage (13) de la vis de réglage (14), sous cette vis (14), le piston (17) coopérant avec une portion lisse dudit trou (13).

## Claims

1. A control valve for a hydraulic power-assisted steering system of a motor vehicle, comprising, in the interior of a housing (2), a pinion (3) and a tubular rotor (4) which are rotatably mounted along the same axis (1) and which are connected via a torsion bar (10) disposed along said axis (1), and also comprising a rotating sleeve (5) which surrounds the rotor (4) and which is attached in rotation to the pinion (3), said control valve also comprising hydraulic channels and chambers, **characterised in that**, in order to suppress noise and vibrations of a hydraulic origin, the control valve is provided with means (13, 14, 15) for adjusting the dead volumes of oil (12) contained in said control valve so as to damp out interfering hydraulic waves.

2. A control valve according to claim 1, **characterised in that** the means for adjusting the dead volumes of oil (12) are formed by an adjusting screw (14) mounted in a tapped hole (13) which is disposed in the housing (2) between the dead volume (12) and the outside.

3. A control valve according to claim 1 or 2, **characterised in that** the means (13, 14, 15) for adjusting the dead volumes of oil (12) are completed by at least one damping element (16, 17) such as a spring and/or a damping unit and/or a confined volume of air and/or an element which permits the passage of oil through a restriction orifice.

4. A control valve according to claims 2 and 3 together, **characterised in that** the damping element, such as a spring (16), which is associated with a small piston (17), is placed in the mounting hole (13) of the adjusting screw (14) under said screw (14), said piston (17) cooperating with a smooth portion of said hole (13).

## Patentansprüche

1. Hilfsventil für eine hydraulische Kraftfahrzeugservolenkung, die im Inneren eines Gehäuses (2), ein Ritzel (3) und einen rohrförmigen Rotor (4) aufweist, die drehbeweglich entlang derselben Achse (1) angebracht und mittels eines Torsionsstabs (10) verbunden sind, der entlang dieser Achse (1) angeordnet ist, und die einen drehbaren Mantel (5) umfasst, der den Motor (4) umgibt und drehbar mit dem Ritzel (3) verbunden ist, wobei das Hilfsventil ferner hydraulische Kanäle und Kammern umfasst,
**dadurch gekennzeichnet, dass**
zur Unterdrückung der Geräusche und Vibrationen hydraulischen Ursprungs,
das Hilfsventil mit Regelungseinrichtungen (13, 14, 15) für die in diesem Ventil enthaltenen, von Öl freien Innenräume (12) versehen ist, um die hydraulischen Störwellen zu dämpfen.

2. Hilfsventil nach Anspruch 1,
**dadurch gekennzeichnet, dass**
die Regelungseinrichtungen für die von Öl freien Innenräume (12) aus einer Einstellschraube (14) bestehen, die in einem mit Gewinde versehenen Loch (13) angebracht ist, das im Gehäuse (2) zwischen dem freien Innenraum (12) und dem Äußeren ausgebildet ist.

3. Hilfsventil nach Anspruch 1 oder 2,
**dadurch gekennzeichnet, dass**
die Regelungseinrichtungen (13, 14, 15) für die von Öl freien Innenräume (12) durch mindestens ein Dämpfungselement (16, 17) wie eine Feder und/oder ein Dämpfungsteil und/oder ein eingeschlossenes Luftvolumen und/oder ein Element ergänzt sind, das einen Öldurchgang durch eine Drosselöffnung zulässt.

4. Hilfsventil gemäß der Vorrichtung der Ansprüche 2 und 3,
**dadurch gekennzeichnet, dass**
das Dämpfungselement wie die Feder (16), das einem kleinen Ritzel (17) zugehörig ist, im Montageloch (13) der Einstellschraube (14) unter dieser Feder (14) angeordnet ist, wobei das Ritzel (17) mit einem glatten Abschnitt dieses Lochs (13) zusammenwirkt.
